# EUROPÄISCHE PATENTSCHRIFT

(11) **EP 1 489 145 B1**
(45) Veröffentlichungstag und Bekanntmachung des Hinweises auf die Patenterteilung: **18.01.2012**
(21) Anmeldenummer: 04008123.4
(22) Anmeldetag: 02.04.2004
(51) Int. Cl.: C09C 1/50

(54) **Verfahren zur Herstellung von Furnaceruss**
Process for producing Furnace Black
Procédé de fabrication de noir de fourneau

(30) Priorität: 24.04.2003 DE 10318527
(43) Veröffentlichungstag der Anmeldung: 22.12.2004
(73) Patentinhaber: Evonik Carbon Black GmbH, 63457 Hanau (DE)
(72) Erfinder: Heinze, Volker, Dr., 58099 Hagen (DE); Kopietz, Peter, 58730 Fröndenberg (DE); Mathias, Johann, Dr., 63796 Kahl (DE)
(74) Vertreter: Polypatent

(56) Entgegenhaltungen:
- EP-B1- 0 703 950
- DE-A1- 3 916 981
- GB-A- 2 094 773
- US-A1- 2001 055 556

## Beschreibung

Die Erfindung betrifft ein Verfahren zur Herstellung von Furnaceruß.

Ofenruße, oder auch Furnaceruße, werden in großen Mengen für die verschiedensten technischen Anwendungen in Rußreaktoren erzeugt. Rußreaktoren bestehen im allgemeinen aus längs der Reaktorachse angeordneter Brennkammer, Mischkammer und Reaktionskammer, die miteinander in Verbindung stehen und einen Strömungspfad für die Reaktionsmedien von der Brennkammer über die Mischkammer zur Reaktionskammer bilden. In der Brennkammer wird zur Erzeugung einer hohen Temperatur ein Brennstoff, gewöhnlich Gas oder Öl, mit Hilfe eines Brenners unter Zugabe von vorgewärmter Verbrennungsluft verbrannt. In die heißen Verbrennungsgase wird ein meist flüssiger, kohlenstoffhaltiger Rußrohstoff, zum Beispiel ein Rußöl, eingesprüht, wobei ein Teil des Rußrohstoffes verbrennt und der Rest durch thermische Spaltung in Ruß und Restgas umgesetzt wird. Als Rußrohstoffe dienen zum Beispiel Kohlenwasserstoffe hocharomatischer Zusammensetzung wie Kohleteeröle, Ethylencrackerrückstände und andere Erdölprodukte.

Der Rußrohstoff wird gewöhnlich in eine als Engstelle ausgebildete Mischkammer eingesprüht oder eingespritzt, um durch die dort herrschenden großen Turbulenzen der Verbrennungsgase eine intensive Vermischung des Rußrohstoffes mit den heißen Verbrennungsgasen zu erreichen. Dieses Gemisch tritt dann in die Rußreaktionskammer ein, die gewöhnlich einen aufgeweiteten Querschnitt gegenüber der Engstelle besitzt. In dieser Reaktionskammer läuft der eigentliche Rußbildungsprozess aus Keimbildung mit anschließendem Wachstum der Rußkeime ab und wird stromabwärts durch Einsprühen von Wasser abgestoppt. Wobei alle Reaktorbauteile aus einem Stahlmantel mit einer Innenauskleidung aus keramischem Material bestehen.

Die physikalischen und chemischen Prozesse, die während der Rußbildung ablaufen, sind sehr komplex. Die Wärme des Verbrennungsgases wird sehr schnell auf die zerstäubten Tröpfchen des Rußrohstoffes übertragen und führt zu einer mehr oder weniger vollständigen Verdampfung der Tröpfchen. Ein Teil des verdampften Rußrohstoffes wird in dem Überschuß der Verbrennungsluft verbrannt. Unter diesen Bedingungen werden die Moleküle des Rußrohstoffes dehydriert und bilden Rußkeime. Die Keimbildung ist im wesentlichen auf einen begrenzten Raumbereich, der Keimbildungszone, innerhalb der Reaktionskammer direkt hinter der Mischkammer begrenzt. Im stromabwärtigen Bereich der Reaktionskammer wachsen die Rußkeime zu kugel- bzw. nadelförmigen Primärteilchen heran. Die Primärteilchen wiederum lagern sich unter den reaktiven Bedingungen in der Reaktionskammer zu größeren fest miteinander verbundenen Aggregaten zusammen. Die Art und Weise dieser Zusammenlagerung wird gemeinhin als Struktur des Rußes bezeichnet.

Die wesentlichen Einflußgrößen für die Rußbildung sind der Luft- bzw. Sauerstoffüberschuß in den Verbrennungsgasen, die Temperatur der Verbrennungsgase und die Reaktionsbeziehungsweise Verweildauer beginnend mit dem Einmischen des Rußrohstoffes in die Verbrennungsgase bis zum Abstoppen der Reaktion durch Abschrecken mit Wasser, welches in den stromabwärtigen Bereich der Reaktionskammer mittels einer Abschreckdüse eingesprüht wird.

Die Temperatur der Verbrennungsgase wird gewöhnlich auf einen Wert zwischen 1200 und 1900° C eingestellt. Je höher die Temperatur ist, desto kleiner werden die gebildeten Rußaggegrate. Die Verweildauer beeinflußt ebenfalls die Aggregatgrößenverteilung. Sie ist in bekannten Rußreaktoren durch Strömungsgeschwindigkeit und Positionierung der Abschreckdüse zwischen 1 ms und 1 s einstellbar.

Das genannte Herstellverfahren für Ruß ist aus Ullmanns Enzyklopädie der technischen Chemie 4, Auflage Band 14, Seite 633- (1977) und aus Carbon Black, Science and Technology, Verlag Marcel Dekker, Inc., New York 1993 bekannt.

Das bekannte Verfahren weist den Nachteil auf, daß farbtiefe Furnaceruße nur durch teure Nachbehandlungen, außerhalb des Furnacereaktors, erhalten werden können.

Aufgabe der vorliegenden Erfindung ist es, ein Verfahren zur Verfügung zu stellen, bei dem farbtiefe Furnaceruße direkt im Furnacereaktor hergestellt werden können.

Gegenstand der Erfindung ist ein Verfahren zur Herstellung von Furnaceruß durch Erzeugen eines Stromes heißer Verbrennungsgase in einer Brennkammer, Führen der heißen Verbrennungsgase längs einer Strömungsachse von der Brennkammer durch eine Reaktorengstelle in eine Reaktionszone, Einmischen von Rußrohstoff in die Strömung der Verbrennungsgase vor, innerhalb oder hinter der Reaktorengstelle und Abstoppen der Rußbildung stromabwärts in der Reaktionszone durch Einsprühen von Wasser, welches dadurch gekennzeichnet ist, daß man axial durch den Gasbrenner und gegebenenfalls an den Radialölstutzen Wasserdampf eindüst und vor und/oder nach der Reaktorengstelle Perlruß einträgt.

Die Brennkammertemperatur kann 1000° bis 2000°C, vorzugsweise 1000° bis 1700°C, betragen. Der Gasbrenner kann axial angeordnet sein. Die Anzahl der Radialölstutzen an denen Wasserdampf eingetragen wird, kann 1 bis 8, vorzugsweise 2 bis 4, besonders bevorzugt 4, betragen. Der eingedüste Wasserdampf an den Radialölstutzen kann Kaliumoder Natriumverbindungen, beispielsweise Kalium- oder Natriumcarbonat, enthalten. Die Kalium- oder Natriumverbindungen können zur Einstellung der Rußstruktur verwendet werden. Die gesamte Wasserdampfmenge kann 100 kg/h bis 10 t/h, vorzugsweise 1 t/h bis 6 t/h, betragen. Die Kalium- beziehungsweise Natriummenge kann 0 bis 50 kg/h, vorzugsweise 0 bis 15 kg/h, betragen.

Als Perlruß kann jeder bekannte Ruß, wie zum Beispiel Furnaceruß, Gasruß, Channelruß, Flammruß, Thermalruß, Acetylenruß, Plasmaruß, Inversionsruße, bekannt aus DE 195 21 565, Si-haltige Ruße, bekannt aus WO 98/45361 oder DE 19613796, oder metallhaltige Ruße, bekannt aus WO 98/42778, Lichtbogenruß und Ruße, die Nebenprodukte chemischer Produktionsprozesse sind, verwendet werden. Als Perlruß kann auch off-spec Ruß (Abfallruß) verwendet werden.

Der Perlruß kann mit einem Tragmedium eingetragen werden. Als Tragmedium kann man Luft, Stickstoff, Erdgas, Tailgas oder andere Gaskomponenten verwenden.

Der Wasserdampf an den Radialölstutzen kann über Sprühoder Spritzdüsen radial nach innen in den Strom der Verbrennungsgase eingedüst werden.

Der Wasserdampf der axial durch den Gasbrenner eingedüst wird, kann mittels einer axialen Lanze, an deren Kopf sich die Sprüh- oder Spritzdüsen befinden, in die Verbrennungsgase eingemischt werden.

Als Sprüh- oder Spritzdüsen können sowohl Einstoff- als auch Zweistoffdüsen verwendet werden, wobei im Falle von Zweistoffdüsen neben Wasserdampf noch Wasserdampf mit Kalium- beziehungsweise Natriumverbindungen zur Anwendung kommen können.

Bei dem erfindungsgemäßen Verfahren wird ein farbtiefer Pigmentfurnaceruß oder ein Leitfähigkeitsruß erhalten. Bei der thermischen und chemischen Behandlung von Furnaceruß entsteht ein brennbares Gas.

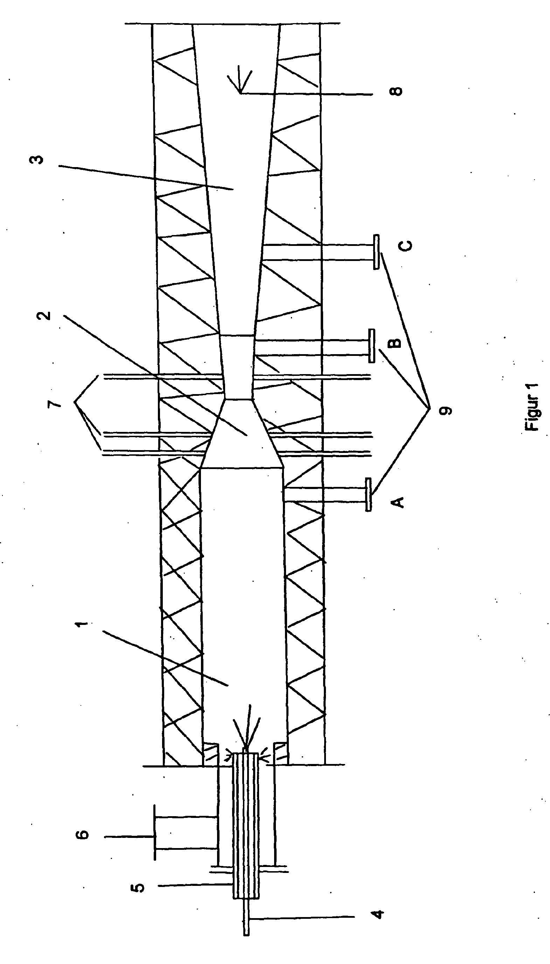

Die Figur 1 zeigt Ausführungsform und Einzelheiten des erfindungsgemäß verwendeten Furnacerußreaktors.

Figur 1 zeigt den Längsquerschnitt eines Furnacerußreaktors mit axialer Gaslanze. Dargestellt ist die Brennkammer (1), die Reaktorengstelle (2) und die Reaktionszone (3). In dem Erdgasbrenner (5) befindet sich eine axiale Lanze (4) durch die Wasserdampf eingedüst wird. Die Verbrennungsluft wird durch die axiale Öffnung (6) zugeführt. Durch die Radialölstutzen (7) kann weiterer Wasserdampf zugeführt werden. Das Abbrechen der Reaktion erfolgt durch Einsprühen von Wasser über die Quenchwasserdüsen (8). Der Perlruß (9) wird mit oder ohne Tragmedium vor (A) oder nach (B oder C) der Engstelle eingetragen.

### Beispiel:

In einem Furnacerußreaktor gemäß Figur 1 wird mit den Reaktorparametern der Tabelle 1 ein Ruß hergestellt.

**Tabelle 1**

| | | |
|---|---|---|
| Verbrennungsluft | [Nm³/h] | 3000 |
| Erdgas | [Nm³/h] | 250 |
| gesamte Wasserdampfmenge | [kg/h] | 3000 |
| Kaliumcarbonat | [kg/h] | 8 |
| Temperatur Brennkammer | [°C] | 1500-1600 |
| Rußeindüsung | [kg/h] | 850 |
| Position Rußeindüsung (vor Engstelle) | [mm] | 320 |
| Temperatur hinter Engstelle | [°C] | 1400-1450 |
| Luftinjektor | [Nm³/h] | 200 |
| Temperatur Reaktorende | [°C] | 700 |

Der erhaltene Ruß hat die in Tabelle 2 enthaltenen Rußeigenschaften.

**Tabelle 2**

| | | | |
|---|---|---|---|
| Iodzahl | [mg/g] | DIN 53582 | 814 |
| BET-Oberfläche | [m²/g] | ASTM D-4820 | 749 |
| CTAB-Oberfläche | [m²/g] | ASTM D-3765 | 371 |
| DBP | [ml/100g] | DIN 53601 | 235 |
| pH-Wert | [-] | DIN EN ISO 787/9 | 6,2 |
| Ölbedarf | [g/100g] | DIN EN ISO 787/5 | 690 |
| My-Wert | [-] | DIN 55979 | 263 |
| Tint | [%] | DIN EN ISO 787/16 | 120 |

Die Ruße hergestellt mit dem erfindungsgemäßen Verfahren haben eine hohe Oberfläche, hohe Farbstärke (Tint) und eine hohe Farbtiefe (My-Wert).

## Patentansprüche

1. Verfahren zur Herstellung von Furnaceruß durch Erzeugen eines Stromes heißer Verbrennungsgase in einer Brennkammer, Führen der heißen Verbrennungsgase längs einer Strömungsachse von der Brennkammer durch eine Reaktorengstelle in eine Reaktionszone, Einmischen von Rußrohstoff in die Strömung der Verbrennungsgase vor, innerhalb oder hinter der Reaktorengstelle und Abstoppen der Rußbildung stromabwärts in der Reaktionszone durch Einsprühen von Wasser, **dadurch gekennzeichnet, daß** man axial durch den Gasbrenner und gegebenenfalls an den Radialölstutzen Wasserdampf eindüst und vor und / oder nach der Reaktorengstelle Perlruß einträgt.

2. Verfahren zur Herstellung von Furnaceruß nach Anspruch 1, **dadurch gekennzeichnet, daß** die Anzahl der Radialölstutzen an denen Wasserdampf eingetragen wird, 1 bis 8 ist.

3. Verfahren zur Herstellung von Furnaceruß nach Anspruch 1, **dadurch gekennzeichnet, daß** der eingedüste Wasserdampf an den Radialölstutzen Kalium- oder Natriumverbindungen enthält.

4. Verfahren zur Herstellung von Furnaceruß nach Anspruch 1, **dadurch gekennzeichnet, daß** man den Perlruß mit einem Tragmedium einträgt.

5. Verfahren zur Herstellung von Furnaceruß nach Anspruch 4, **dadurch gekennzeichnet, daß** man als Tragmedium Luft, Stickstoff, Erdgas, Tailgas oder andere Gaskomponenten benutzt.

## Claims

1. A process for the production of furnace black by producing a stream of hot combustion gases in a combustion chamber, feeding the hot combustion gases along a flow axis from the combustion chamber through a reactor narrow point into a reaction zone, mixing carbon black raw material into the flow of the combustion gases in front of, inside or behind the reactor narrow point and stopping carbon black formation downstream in the reaction zone by spraying in water, **characterised in that** steam is jetted in axially through the gas burner and optionally at the radial oil nozzles and beaded carbon black is introduced before and/or after the reactor narrow point.

2. The process for the production of furnace black according to claim 1, **characterised in that** the number of radial oil nozzles at which steam is introduced is 1 to 8.

3. The process for the production of furnace black according to claim 1, **characterised in that** the steam which is jetted in at the radial oil nozzles contains potassium or sodium compounds.

4. The process for the production of furnace black according to claim 1, **characterised in that** the beaded carbon black is introduced with a support medium.

5. The process for the production of furnace black according to claim 4, **characterised in that** air, nitrogen, natural gas, tail gas or other gas components are used as the support medium.

## Revendications

1. Procédé de préparation de noir furnace par la mise en oeuvre des étapes suivantes : formation d'un courant de gaz de combustion chauds dans une chambre de combustion, transfert des gaz de combustion chauds le long d'un axe d'écoulement de la chambre de combustion, dans une zone de réaction, par un étranglement du réacteur, introduction et mélange de noir de carbone brut dans l'écoulement des gaz de combustion, au niveau ou à l'arrière de l'étranglement du réacteur, et arrêt de la formation de noir de carbone en aval dans cette zone de réaction, par pulvérisation d'eau,
**caractérisé en ce que**
l'on injecte de la vapeur d'eau axialement au travers du bruleur à gaz et le cas échéant sur les orifices de remplissage, d'huile radiaux, et on introduit du noir de carbone granulé en amont et/ou en aval de l'étranglement.

2. Procédé de préparation de noir furnace conforme à la revendication 1,
**caractérisé en ce que**
le nombre d'orifices de remplissage d'huile radiaux sur lesquels de la vapeur d'eau est injectée est de 1 à 8.

3. Procédé de préparation de noir furnace conforme à la revendication 1,
**caractérisé en ce que**
la vapeur d'eau injectée sur les orifices de remplissage d'huile radiaux renferme des composés de potassium ou de sodium.

4. Procédé de préparation de noir furnace conforme à la revendication 1,
**caractérisé en ce que**
l'on introduit le noir de carbone granulé avec un milieu porteur.

5. Procédé de préparation de noir furnace conforme à la revendication 4,
**caractérisé en ce qu'**
en tant que milieu porteur on utilise de l'air, de l'azote, du gaz naturel, du gaz de queue ou d'autres composés gazeux.
